# FASCICULE DE BREVET EUROPEEN

(11) **EP 3 230 091 B1**
(45) Date de publication et mention de la délivrance du brevet: **17.10.2018**
(21) Numéro de dépôt: 15808245.3
(22) Date de dépôt: 11.12.2015
(51) Int. Cl.: B60C 11/13, B60C 11/04

(54) **DISPOSITIF ATTENUATEUR DE BRUIT EN ROULAGE POUR PNEU**
VORRICHTUNG ZUR DÄMPFUNG DES FAHRBAHNGERÄUSCHES FÜR EINEN REIFEN
DEVICE FOR ATTENUATING ROAD NOISE FOR A TIRE

(30) Priorité: 12.12.2014 FR 1462335
(43) Date de publication de la demande: 18.10.2017
(73) Titulaire: Compagnie Générale des Etablissements Michelin, 63000 Clermont-Ferrand (FR); Michelin Recherche et Technique S.A., 1763 Granges-Paccot (CH)
(72) Inventeur: ROTY, Gael, 63040 Clermont Ferrand Cedex 9 (FR)
(74) Mandataire: Regimbeau
(86) Numéro de dépôt international: PCT/EP2015/079485
(87) Numéro de publication internationale: WO 2016/092094

(56) Documents cités:
- EP-A1- 0 908 330
- WO-A1-2011/132064
- DE-A1- 4 403 662
- FR-A1- 2 983 431
- JP-A- 2007 210 569
- JP-A- 2012 116 339

## Description

### DOMAINE DE L'INVENTION

La présente invention concerne les bandes de roulement de pneu et plus particulièrement les bandes de roulement comprenant des rainures ces dernières étant pourvues de dispositifs de fermeture pour réduire le bruit généré par la mise en résonance de l'air dans ces rainures lors du roulage.

### ÉTAT DE LA TECHNIQUE

De manière usuelle un pneu comprend une bande de roulement destinée à être en contact avec une route lors du roulage d'un véhicule pourvu de pneus. Cette bande de roulement est pourvue d'un dessin de sculpture formé d'éléments en relief, ces éléments délimitant des rainures permettant le drainage d'eau présente sur la route par temps de pluie. Toutefois, la présence de rainures et notamment de rainures orientées circonférentiellement, est source de bruit en roulage.

### Définitions :

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document toute direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Une rainure désigne l'espace délimité par des parois de matière en vis-à-vis, ces parois étant reliées entre elles par un fond de rainure. Dans les conditions usuelles de roulage, les parois délimitant cette rainure ne peuvent venir en contact l'une contre l'autre.

La surface de roulement d'une bande de roulement correspond à la surface de la bande destinée à venir en contact avec un sol lors du roulage d'un pneu pourvu d'une telle bande.

Il est connu que le passage dans la région de contact d'une bande de roulement avec une route, lors du roulage, génère une circulation d'air dans chaque rainure. Avec la route, chaque rainure forme une sorte de tube ayant deux extrémités ouvertes, la longueur du tube correspondant à la longueur de l'empreinte de contact.

L'air contenu dans ce tube forme une colonne d'air qui est mise en vibration lors du roulage et dont la fréquence de résonance dépend de la longueur séparant les deux extrémités du tube et en conséquence de la longueur de rainure en contact avec la chaussée.

Cette résonance de l'air dans les rainures a comme conséquence de générer, dans un véhicule équipé avec ces pneus, un bruit à l'intérieur du véhicule et un bruit à l'extérieur du véhicule. Ces bruits intérieur et extérieur correspondent le plus souvent à une fréquence voisine de ou égale à 1 kHz correspondant à une fréquence particulièrement sensible à l'oreille humaine.

Afin de réduire un tel bruit de résonance, il est connu de disposer (voir par exemple le document de brevet FR2715891), dans chaque rainure d'orientation circonférentielle ou globalement circonférentielle, une pluralité de dispositifs atténuateurs de bruit, chaque dispositif étant composé de membranes ou lames flexibles relativement peu épaisses en mélange de caoutchouc, chaque membrane ou lame flexible occupant toute la section de la rainure ou à tout le moins une grande partie de cette section pour former un dispositif de fermeture. La mise en place de ces lames flexibles modifie la longueur de chaque tuyau d'air et par là permet de modifier la fréquence de résonance. Il en résulte une modification du bruit perçu. La nature élastique du matériau de chaque lame flexible assure en outre des efforts de rappel suffisants pour assurer le retour des lames flexible dans une position de fermeture de la rainure lorsqu'il n'y a plus de flux de liquide dans ladite rainure.

Chaque lame flexible peut s'étendre à partir du fond de la rainure ou être fixée à l'une au moins des parois délimitant ladite rainure. Par relativement peu épaisse, on entend que chaque lame flexible est apte à fléchir pour ouvrir au moins partiellement la section de la rainure sous l'effet d'un flux de liquide notamment lors d'un roulage par temps de pluie. Ces mêmes lames restent en position de fermeture de la rainure lors de roulage par temps sec. Comme cela a été rappelé plus haut, les dispositifs formés de lames flexibles décrits dans l'art antérieur - de par la nécessité de pouvoir fléchir sous un flux de liquide - sont reliés soit au fond d'une rainure soit à l'une des parois latérales délimitant une rainure.

Grâce à ces lames flexibles, la longueur de la colonne d'air dans chaque rainure circonférentielle est réduite par rapport à la longueur totale de la rainure dans le contact, ce qui conduit à un changement de la fréquence de résonance. Le déplacement de fréquence se fait vers des valeurs de fréquences de résonance moins sensibles à l'oreille humaine.

Dans les dispositifs formés d'une lame unique portée par le fond d'une rainure de profondeur donnée, il est parfois difficile de concilier un bon moulage et une bonne flexibilité de la lame. En effet, plus la hauteur de la lame flexible augmente et plus l'arrivée de matière lors du moulage est délicate d'autant que l'épaisseur de chaque lame flexible est faible. Cet état de fait conduit la personne du métier à certains compromis notamment sur l'épaisseur de la lame flexible. Il s'ensuit une plus grande rigidité à l'état neuf pour chaque lame flexible, cette augmentation de rigidité étant encore plus sensible après usure partielle. Ce même type d'inconvénient se rencontre avec des dispositifs formés de lames flexibles portées par une ou deux parois latérales.

Les documents JP 2007/210569 A et DE 44 03 662 A1, qui montre une bande selon le préambule de la revendication 1, décrivent des dispositifs comprenant plusieurs lames flexibles.

Le document EP 908330-B1 divulgue un dispositif réducteur de bruit, ce dispositif étant formé par trois lames flexibles dont deux sont fixées aux parois délimitant une rainure et la troisième au fond de cette rainure. Dans cette disposition la lame fixée sur le fond s'étend jusqu'à la surface de roulement à l'état neuf et pose les mêmes problèmes de réalisation que ceux déjà évoqués. Par ailleurs les deux autres lames ne présentent pas une flexibilité suffisante.

La présente invention propose une solution à ce problème.

L'expression "paroi latérale délimitant une rainure" s'interprète dans le présent document comme désignant l'une ou l'autre des parois latérales en vis-à-vis, ces parois étant reliés entre elles par un fond de rainure. La hauteur du fond de rainure correspond à la limite légale d'usure repérée par au moins un indicateur d'usure.

### BREF EXPOSE DE L'INVENTION

La présente invention est un perfectionnement des dispositifs de fermeture de rainure permettant une réduction du bruit de résonance et vise à la fois à obtenir un moulage et un démoulage aisé des lames flexibles formant le dispositif de fermeture des rainures ainsi qu'une fermeture complète de la rainure.

À cet effet, l'invention a pour objet une bande de roulement pour pneu, cette bande de roulement ayant une surface de roulement destinée à venir en contact avec une chaussée et comprenant au moins une rainure de largeur W et de profondeur P délimitée par deux parois latérales se faisant face, ces parois latérales étant reliées entre elles par un fond de rainure. Au moins une rainure comporte une pluralité de dispositifs de fermeture pour réduire le bruit de résonance en roulage généré par cette rainure, chaque dispositif de fermeture comprenant au moins deux séries de lames flexibles, une première série est liée au fond de la rainure et est prévue pour fléchir autour d'un premier axe et au moins une deuxième série liée à une paroi latérale délimitant la rainure, cette deuxième série étant prévue pour fléchir autour d'un deuxième axe, ce deuxième axe étant distinct du premier axe.

La bande de roulement selon l'invention est telle que :
- chaque lame de la première série s'étend sur une hauteur maximale H au plus égale à 25% de la profondeur P mesurée à partir du fond de la rainure à l'état neuf ;
- chaque deuxième série comprend au moins deux lames flexibles s'étendant sur au moins la moitié de la largeur de la rainure ;
- les lames flexibles des première et deuxième séries ont des géométries complémentaires et appropriées pour coopérer les unes avec les autres afin de fermer au moins 70% de la section transversale de la rainure.

En outre, chacune des lames flexibles de chaque deuxième série a deux faces latérales faisant obstruction à la circulation d'air dans la rainure, ces faces latérales étant reliées entre elles par des parois de bord formant l'épaisseur de la lame, une paroi de bord supérieur étant destinée à venir en contact avec la route lors du roulage et une paroi de bord inférieur faisant face au fond de la rainure dans laquelle est disposé le dispositif de fermeture, la paroi de bord inférieure faisant un angle moyen A non nul avec une direction passant par les points de raccordement entre les parois latérales et le fond de la rainure, cet angle A étant tel que la paroi de bord inférieure à tendance à s'écarter du fond de la rainure quand on la parcourt à partir de la paroi latérale sur laquelle elle est fixée.

Préférentiellement, l'angle moyen A du bord inférieur des lames flexibles de chaque deuxième série est au moins égal à 10° et encore plus préférentiellement au moins égal à 20° dans le but de faciliter le démoulage en réduisant les efforts agissant sur les lames pendant l'opération de démoulage.

Dans une variante de l'invention, les lames flexibles de la première série et de chaque deuxième série sont disposées de manière à être décalées les unes par rapport aux autres afin de permettre un chevauchement partiel entre les faces latérales desdites lames prises deux à deux et ainsi réaliser une plus complète fermeture de la section de la rainure.

Grâce à ce dispositif, la première série de lames flexibles peut fléchir autour d'un premier axe passant par les points de contact de ces lames avec le fond de la rainure ; la flexion sous l'effet d'un liquide circulant dans la rainure conduit la première série de lames flexibles à se plaquer contre le fond de la rainure. Chaque deuxième série de lames flexibles liées à une paroi latérale délimitant la rainure a tendance à fléchir autour d'un axe parallèle à ladite paroi ; la flexion sous l'effet d'un liquide circulant dans la rainure conduit chaque deuxième série de lames flexibles à se plaquer contre la paroi latérale.

De manière plus préférentielle, la hauteur maximale H de chaque lame flexible de la première série fixée sur le fond de la rainure est au plus égale à 15% de la profondeur de la rainure.

Avantageusement le premier axe de flexion est perpendiculaire ou quasiment perpendiculaire au deuxième axe de flexion (dans ce dernier cas l'écart angulaire entre les deux directions est au moins égal à 80°).

Avantageusement les lames flexibles du dispositif selon l'invention coopèrent pour fermer la section de la rainure sur au moins 90% de la section de ladite rainure à l'état neuf.

Avantageusement, l'épaisseur de chaque lame flexible portée par le fond de rainure est inférieure à l'épaisseur de chaque lame flexible portée par une paroi latérale. Avantageusement l'épaisseur de chaque lame flexible fixée au fond de la rainure est au plus égal à 0.4 mm et encore plus avantageusement au plus égal à 0.3mm.

Dans une variante de l'invention, le dispositif de réduction de bruit formé dans une rainure comprend une première série de lames flexibles de géométrie triangulaire liée au fond de la rainure.

Dans une autre variante, le dispositif de réduction de bruit formé dans une rainure comprend une première série de lames flexibles de géométrie triangulaire liée au fond de la rainure, cette première série de lames comprenant au moins deux lames flexibles. Dans cette variante de l'invention, la formation de deux lames flexibles portées par le fond de la rainure permet d'obtenir une grande flexibilité quel que soit le niveau d'usure de la bande.

Dans une autre variante, le dispositif de réduction de bruit formé dans une rainure comprend une première série de lames flexibles de géométrie triangulaire liées au fond de la rainure et au moins une deuxième série de lames flexibles portées par une paroi latérale dont la forme est complémentaire de celle de la première série pour fermer la section de la rainure, ces première et deuxième séries étant décalées l'une par rapport à l'autre dans la direction principale de la rainure de manière à pouvoir générer un chevauchement entre lesdites lames et ainsi obtenir une meilleure fermeture de la section de la rainure.

Par direction principale d'une rainure on entend ici la direction suivie par les liquides pouvant être amenés à s'écouler dans ladite rainure lors de roulage par temps de pluie.

Grâce au dispositif selon l'invention, il est à la fois possible de fermer à l'état neuf la totalité de la rainure tout en conservant une flexibilité importante de chaque partie du dispositif et cela quel que soit l'état d'usure de la bande.

Ce dispositif réducteur de bruit peut bien entendu être mis en oeuvre avec tout type de rainure, que ce soit une rainure d'orientation circonférentielle, ou transversale ou oblique.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 montre une vue en surface d'une bande de roulement selon l'invention à l'état neuf ;
La figure 2 montre un dispositif selon l'invention dans une position de fermeture d'une rainure ;
La figure 3 montre le dispositif de la figure 2 dans une position d'ouverture sous l'action d'un écoulement de liquide dans la rainure ;
La figure 4 montre une variante de l'invention dans une position de fermeture d'une rainure ;
La figure 5 montre une variante de l'invention dans une position de fermeture d'une rainure ;
La figure 6 montre une vue de la surface de roulement de la variante montrée avec la figure 5.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

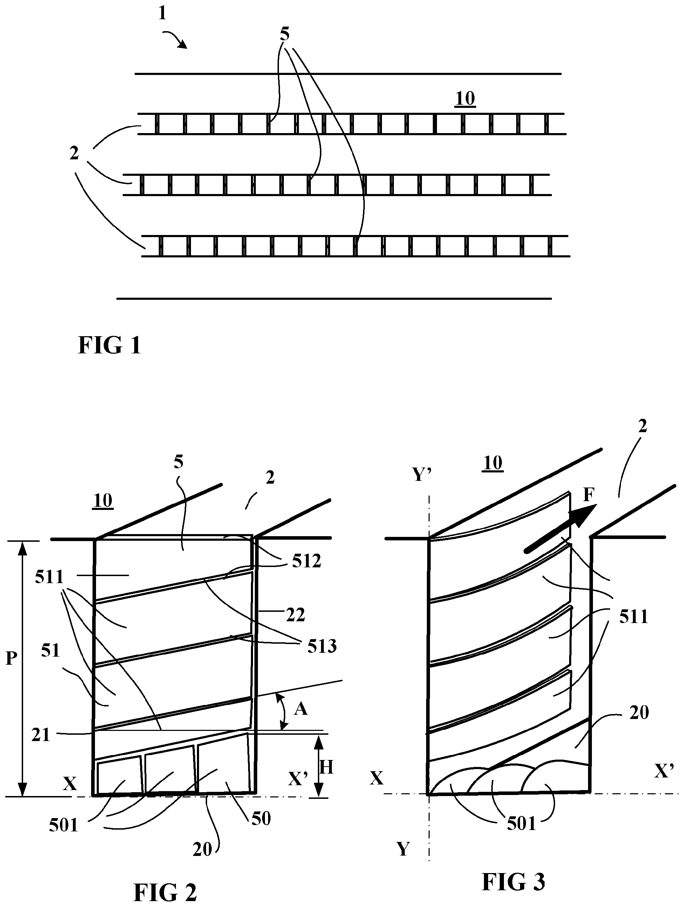

La figure 1 montre une vue partielle de la surface d'une bande de roulement 1 de pneu, cette bande de roulement 1 comprenant trois rainures 2 d'orientation circonférentielle. Pour réduire le bruit liée à la résonance de l'air dans chaque rainure 2 au passage dans le contact avec la route, il est formé dans chaque rainure une pluralité de dispositifs 5 réducteur de bruit de résonance.

Sur la figure 2, l'un de ces dispositifs est représenté à l'état fermé, c'est-à-dire dans une position telle que la section transversale de la rainure est fermée - ici la section de la rainure est fermée sur 90% de sa surface - par ce dispositif afin de réduire la longueur du tuyau rempli d'air pouvant entrer en résonance et dans le même temps empêcher la circulation de l'air.

Sur cette figure 2, on distingue en coupe une rainure 2 d'orientation générale circonférentielle formée sur la bande de roulement 1. Cette rainure de largeur W est délimitée par des parois latérales 21, 22 d'éléments de relief, ces parois latérales en vis-à-vis étant reliées par un fond de rainure 20. Cette rainure 2 a une profondeur totale P à l'état neuf, c'est-à-dire avant tout roulage et donc avant toute usure. La bande de roulement comporte une surface de roulement 10 destinée à venir en contact avec la chaussée lors du roulage. En roulage, cette surface de roulement va s'user et se rapprocher progressivement du fond des rainures. Afin de conserver une capacité de drainage suffisante nécessaire à la sécurité de l'usager, il est prévu de disposer dans les rainures des indicateurs de l'usure limite à ne pas dépasser. Cette limite d'usure est en règle générale fixée par les législations des pays. Le raccordement entre le fond et les parois latérales d'une rainure se fait précisément au niveau de cette limite d'usure.

Dans cette rainure 2 on a formé une pluralité de dispositifs 5 réducteurs de bruit, chaque dispositif 5 étant constitué, dans cette première variante de l'invention, par une première série 50 comprenant trois lames flexibles 501 liées au fond de la rainure et une deuxième série 51 comportant plusieurs lames flexibles 511 toutes liées à une même paroi latérale 21. Toutes ces lames flexibles sont réalisées en matériau caoutchouc de même nature que le matériau constituant les éléments de relief de la bande de roulement.

Chaque lame flexible 501 solidaire du fond 20 de la rainure 2 a une largeur égale au tiers de la largeur de la rainure et a une forme trapézoïdale, le bord le plus à l'extérieur (c'est-à-dire le bord le plus proche de la surface de roulement 10) est incliné selon un angle égal dans le cas présent à 20°. Les bords les plus à l'extérieur des trois lames 501 sont formés de manière à être en prolongement l'un de l'autre pour former une sorte de pente continue apte à coopérer avec une lame flexible 511 de la deuxième série 51. Le point de ces lames 501 de la première série 50 le plus proche de la surface de roulement 10 est à une distance H du fond dans le cas présent égale à 15% de la profondeur totale P de la rainure. Ces lames flexibles 501 liées au fond de la rainure ont chacune une épaisseur faible et dans le cas présent égale à 0.4 mm.

Chaque lame flexible 511 de la deuxième série 51 est solidaire de la paroi latérale 21 et s'étend sur toute la largeur de la rainure. Chaque lame flexible 511 de la deuxième série comprend un bord supérieur 512 destiné à venir en contact usant avec la route lors du roulage et un bord inférieur 513 qui est destiné à coopérer avec un bord supérieur d'une autre lame pour assurer la complémentarité et ainsi fermer la section de la rainure. À l'exception de la lame la plus proche de la surface de roulement à l'état neuf, toutes les lames flexibles de la deuxième série ont des bords supérieur et inférieur parallèles entre eux et faisant un angle moyen A dans le cas présent égal à 20°. Cet angle A est mesuré par rapport à une direction indiquée par une flèche X sur la figure 2, cette direction correspondant à une direction à la fois parallèle à la surface de roulement 10 et transverse par rapport à la rainure 2. Les lames flexibles 511 de cette deuxième série sont positionnées dans un plan commun avec la lame de la première série pour assurer la fermeture de la rainure sur au moins 70% de la section de cette rainure.

Comme on peut le voir sur la figure 3 montrant le même dispositif 5 soumis à un flux de liquide indiqué schématiquement par une flèche F, chaque première lame 510 de la première série 50 fixée au fond de la rainure fléchit autour d'un axe XX' parallèle avec le fond 20 de la rainure tandis que les lames flexibles 511 de la deuxième série 51 fléchissent autour d'un axe YY' perpendiculaire à l'axe XX'.

Dans cette variante les lames flexibles de la deuxième série ont une épaisseur égale à 1 mm tandis que la lame flexible fixée au fond de la rainure a une épaisseur égale à 0.4 mm. Le choix d'une plus faible épaisseur pour les lames liées au fond de la rainure est favorable puisqu'il permet de réduire l'effort nécessaire pour fléchir ces lames quel que soit le niveau d'usure de la bande tandis qu'une épaisseur plus importante pour les lames fixées à la paroi latérale est favorable à une usure régulière desdites lames.

Grâce à cette structure il est possible de diminuer sensiblement les efforts de démoulage et ainsi préserver une bonne qualité de fermeture des rainures par le dispositif selon l'invention.

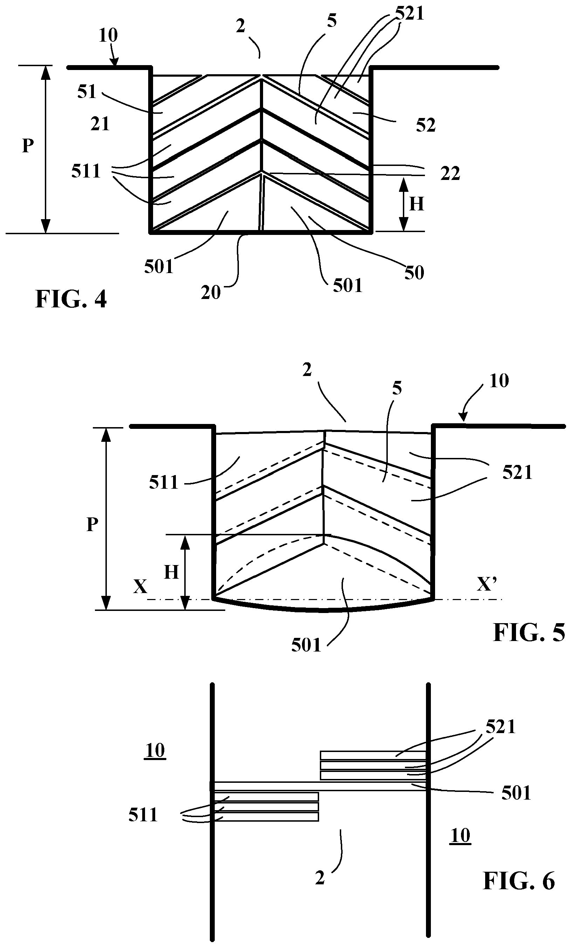

Dans une variante montrée avec la figure 4, un dispositif selon l'invention comprend une première série 50 et deux deuxièmes séries 51, 52 de lames flexibles.

La première série 50 comprend deux lames flexibles 501 liées au fond 20 d'une rainure 2, chaque lame 501 de cette première série 50 ayant la forme d'un triangle rectangle. Le sommet de chaque triangle le plus éloigné du fond de la rainure est à une distance H de ce fond qui est dans le cas présent égal à 20% de la profondeur P de la rainure mesurée à l'état neuf.

Chaque paroi latérale 21, 22 de la rainure 2 se voit dotée d'une série de lames flexibles 511, 521 respectivement - dans le cas présent cinq lames flexibles de géométrie semblable à l'exception des lames les plus proches de la surface de roulement 10. Toutes ces lames sont formées dans un même plan et ont des géométries complémentaires afin de fermer sur au moins 70% la section de la rainure à l'état neuf.

Toutes les lames portées par les parois latérales ont des bords inférieurs (c'est-à-dire face au fond de la rainure) qui sont plans et rectilignes et inclinés d'un angle moyen A égal à 25° dans le cas présent. Les lames de chaque deuxième série couvrent la moitié de la largeur de la rainure.

Dans une autre variante montrée avec la figure 5, un dispositif selon l'invention est assez proche de celui montré avec la figure 4. Au lieu de deux lames flexibles, la première série 50 ne comprend qu'une seule lame 501 dont la géométrie n'est plus triangulaire mais circulaire, le point le plus éloigné du fond étant à une distance H inférieure à 15% de la profondeur P de la rainure à l'état neuf. En outre et pour augmenter le taux de fermeture de la section de la rainure, il est judicieux de former chaque série de lames portées par une paroi latérale délimitant la rainure de manière à ce qu'il existe un léger recouvrement d'une lame avec ses voisines. Un recouvrement est également réalisé entre la première série et chacune des deux deuxièmes séries. Ces recouvrements peuvent être limités à des valeurs faibles, par exemple 1 mm et cela d'autant que l'espace entre les lames flexibles peut être le plus réduit possible tout en satisfaisant aux contraintes de fabrication.

Sur la figure 6 on a représenté une vue de la surface de roulement de la bande montrée avec la figure 5. On voit que de part et d'autre, dans la direction principale de la rainure (c'est-à-dire la direction d'écoulement d'un liquide à l'intérieur de cette rainure), de la lame flexible 501 liée au fond de la rainure sont disposées les lames flexibles 511 et 512 des deuxièmes séries 51, 52 respectivement.

L'invention ayant été décrite de manière générale et au moyen de quelques variantes, il doit être compris que cette invention n'est pas limitée à ces seules variantes décrites et représentées. Notamment lorsque les parois latérales délimitant une rainure font un angle différent de 90 degrés avec la surface de roulement à l'état neuf, il est aisé à la personne du métier d'adapter les géométries de chaque lame pour permettre une ouverture de la section de la rainure lors d'un roulage sur chaussée revêtue d'eau. Par ailleurs, les variantes décrites ici peuvent être combinées entre elles par la personne du métier en fonction de l'objectif poursuivi sans sortir de son cadre tel que défini par les revendications.

## Revendications

1. Bande de roulement (1) pour pneu, cette bande de roulement ayant une surface de roulement (10) destinée à venir en contact avec une chaussée et comprenant au moins une rainure (2) de profondeur P délimitée par deux parois latérales (21, 22) se faisant face, ces parois latérales étant reliées entre elles par un fond (20), au moins une rainure comportant une pluralité de dispositifs (5) de fermeture pour réduire le bruit de résonance en roulage généré par cette rainure, chaque dispositif (5) comprenant au moins deux séries de lames flexibles, une première série (50) est liée au fond (20) de la rainure et est prévue pour fléchir autour d'un premier axe (XX') et au moins une deuxième série (51) liée à une paroi latérale délimitant la rainure, cette deuxième série (51) étant prévue pour fléchir autour d'un deuxième axe (YY'), ce deuxième axe étant distinct du premier axe, où les lames flexibles des première et deuxième séries ont des géométries complémentaires et appropriées pour coopérer les unes avec les autres afin de fermer au moins 70% de la section transversale de la rainure, cette bande de roulement étant **caractérisée en ce que**
- chaque deuxième série (51) liée à une paroi comprend au moins deux lames flexibles (511), chaque lame flexible de cette deuxième série s'étendant sur au moins la moitié de la largeur de la rainure ;
- chacune des lames flexibles de chaque deuxième série (51) a deux faces latérales faisant obstruction à la circulation d'air dans la rainure, ces faces latérales étant reliées entre elles par des parois de bord formant l'épaisseur de la lame, une paroi de bord supérieur (512) étant destinée à venir en contact avec la route lors du roulage et une paroi de bord inférieur (513) faisant face au fond de la rainure dans laquelle est disposé le dispositif (5), la paroi de bord inférieure (513) faisant un angle moyen A non nul avec une direction passant par les points de raccordement entre les parois latérales et le fond de la rainure, cet angle A étant tel que la paroi de bord inférieure à tendance à s'écarter du fond de la rainure quand on parcourt cette paroi de bord inférieur à partir de la paroi latérale sur laquelle elle est fixée.

2. Bande de roulement (1) pour pneu selon la revendication 1 **caractérisée en ce que** l'angle moyen A du bord inférieur des lames flexibles (511) de chaque deuxième série (51) est au moins égal à 10° et encore plus préférentiellement au moins égal à 20° dans le but de faciliter le démoulage en réduisant les efforts agissant sur les lames pendant l'opération de démoulage.

3. Bande de roulement (1) pour pneu selon la revendication 1 ou la revendication 2 **caractérisée en ce que** les lames flexibles (501) de la première série (50) et les lames flexibles (511) de chaque deuxième série (51) sont disposées de manière à être décalées les unes par rapport aux autres afin de permettre un chevauchement partiel entre les faces latérales desdites lames prises deux à deux et ainsi réaliser une plus complète fermeture de la section de la rainure.

4. Bande de roulement (1) pour pneu selon l'une des revendications 1 à 3 **caractérisée en ce que** la hauteur maximale H de chaque lame flexible (501) de la première série (50) fixée sur le fond (20) de la rainure est au plus égale à 80% de la profondeur P de la rainure.

5. Bande de roulement (1) pour pneu selon l'une des revendications 1 à 4 **caractérisée en ce que** l'épaisseur de chaque lame flexible (501) portée par le fond (20) de rainure est inférieure à l'épaisseur de chaque lame flexible (511) portée par une paroi latérale de la rainure.

6. Bande de roulement (1) pour pneu selon la revendication 5 **caractérisée en ce que** l'épaisseur de chaque lame flexible fixée au fond de la rainure est au plus égal à 0.4 mm et plus préférentiellement encore au plus égal à 0.3 mm.

7. Bande de roulement (1) pour pneu selon l'une des revendications 1 à 6 **caractérisée en ce que** le dispositif de réduction de bruit formé dans une rainure comprend une première série (50) de lames flexibles (501) de géométrie triangulaire.

8. Bande de roulement (1) pour pneu selon la revendication 7 **caractérisée en ce que** la première série de lames flexibles comprenant au moins deux lames flexibles.

9. Bande de roulement (1) pour pneu selon l'une des revendications 1 à 8 **caractérisée en ce que** le dispositif (5) ferme la section de la rainure sur au moins 90% de la section de ladite rainure à l'état neuf.

## Patentansprüche

1. Lauffläche (1) für Reifen, wobei diese Lauffläche eine Laufoberfläche (10) hat, die bestimmt ist, mit einer Fahrbahn in Kontakt zu kommen und mindestens eine Rille (2) mit der Tiefe P aufweist, die von zwei gegenüberliegenden Seitenwänden (21, 22) begrenzt ist, wobei diese Seitenwände durch einen Boden (20) miteinander verbunden sind, wobei mindestens eine Rille eine Vielzahl von Verschlussvorrichtungen (5) aufweist, um das Resonanzgeräusch beim Fahren zu dämpfen, das von dieser Rille erzeugt wird, wobei jede Vorrichtung (5) mindestens zwei Reihen flexibler Lamellen umfasst, wobei eine erste Reihe (50) mit dem Boden (20) der Rille verbunden ist und vorgesehen ist, sich um eine erste Achse (XX') zu biegen, und mindestens eine zweite Reihe (51), die mit einer Seitenwand verbunden ist, welche die Rille begrenzt, wobei diese zweite Reihe (51) vorgesehen ist, sich um eine zweite Achse (YY') zu biegen, wobei sich diese zweite Achse von der ersten Achse unterscheidet, wobei die flexiblen Lamellen der ersten und zweiten Reihe komplementäre Geometrien haben und geeignet sind, miteinander zusammenzuwirken, um mindestens 70 % des Querschnitts der Rille zu schließen, wobei diese Lauffläche **dadurch gekennzeichnet ist, dass**:
- jede zweite Reihe (51), die mit einer Wand verbunden ist, mindestens zwei flexible Lamellen (511) umfasst, wobei sich jede flexible Lamelle dieser zweiten Reihe über mindestens die Hälfte der Breite der Rille erstreckt,
- jede der flexiblen Lamellen jeder zweiten Reihe (51) zwei Seitenflächen hat, welche die Luftzirkulation in der Rille behindern, wobei diese Seitenflächen untereinander durch Randwände verbunden sind, welche die Stärke der Lamelle bilden, wobei eine obere Randwand (512) bestimmt ist, beim Fahren mit der Straße in Kontakt zu kommen, und eine untere Randwand (513) gegenüber dem Boden der Rille ist, in welcher die Vorrichtung (5) angeordnet ist, wobei die untere Randwand (513) einen mittleren Winkel A ungleich Null mit einer Richtung bildet, die durch die Anschlusspunkte zwischen den Seitenwänden und dem Boden der Rille verläuft, wobei dieser Winkel A derart ist, dass die untere Randwand danach strebt, sich vom Boden der Rille zu beabstanden, wenn diese untere Randwand ab der Seitenwand durchquert wird, auf der sie befestigt ist.

2. Lauffläche (1) für Reifen nach Anspruch 1, **dadurch gekennzeichnet, dass** der mittlere Winkel A des unteren Randes der flexiblen Lamellen (511) jeder zweiten Reihe (51) mindestens gleich 10° und in noch bevorzugter Weise mindestens gleich 20° ist mit dem Ziel, das Entformen durch Reduzierung der Kräfte, die auf die Lamellen während des Entformvorgangs wirken, zu erleichtern.

3. Lauffläche (1) für Reifen nach Anspruch 1 oder Anspruch 2, **dadurch gekennzeichnet, dass** die flexiblen Lamellen (501) der ersten Reihe (50) und die flexiblen Lamellen (511) jeder zweiten Reihe (51) derart angeordnet sind, dass sie in Bezug auf die anderen versetzt sind, um eine teilweise Überlappung zwischen den Seitenflächen der paarbildenden Lamellen zu erlauben und damit den Querschnitt der Rille vollständiger zu verschließen.

4. Lauffläche (1) für Reifen nach einem der Ansprüche 1 bis 3, **dadurch gekennzeichnet, dass** die maximale Höhe H jeder flexiblen Lamelle (501) der ersten Reihe (50), die auf dem Boden (20) der Rille befestigt ist, höchsten 80 % der Tiefe P der Rille beträgt.

5. Lauffläche (1) für Reifen nach einem der Ansprüche 1 bis 4, **dadurch gekennzeichnet, dass** die Stärke jeder flexiblen Lamelle (501), die von dem Boden (20) der Rille getragen wird, kleiner als die Stärke jeder flexiblen Lamelle (511) ist, die von einer Seitenwand der Rille getragen wird.

6. Lauffläche (1) für Reifen nach Anspruch 5, **dadurch gekennzeichnet, dass** die Stärke jeder flexiblen Lamelle, die auf dem Boden der Rille befestigt ist, höchstens gleich 0,4 mm und in noch bevorzugter Weise höchstens gleich 0,3 mm beträgt.

7. Lauffläche (1) für Reifen nach einem der Ansprüche 1 bis 6, **dadurch gekennzeichnet, dass** die in einer Rille gebildete Geräuschreduziervorrichtung eine erste Reihe (50) flexibler Lamellen (501) dreieckiger Geometrie umfasst.

8. Lauffläche (1) für Reifen nach Anspruch 7, **dadurch gekennzeichnet, dass** die erste Reihe flexibler Lamellen mindestens zwei flexible Lamellen umfasst.

9. Lauffläche (1) für Reifen nach einem der Ansprüche 1 bis 8, **dadurch gekennzeichnet, dass** die Vorrichtung (5) den Querschnitt der Rille über mindestens 90 % des Querschnitts der Rille in neuem Zustand verschließt.

## Claims

1. A tread for a tire, this tread (1) having a tread surface (10) intended to come into contact with a roadway and comprising at least one groove (2) of depth P delimited by two facing lateral walls (21, 22), these facing lateral walls being connected together by a bottom (20), at least one groove comprising a plurality of closing devices (5) for reducing the running resonance noise generated by this groove, each closing device (5) comprising at least two series of flexible blades, a first series (50) secured to the bottom (20) of the groove and provided to flex around a first axis (XX') and at least one second series (51) secured to a lateral wall delimiting the groove, this second series (51) being provided to flex around a second axis (YY'), this second axis being separate to the first axis, where the flexible blades of the first and second series have suitable geometries to cooperate with one another to close at least 70% of the transversal cross-section of the groove, this tread being **characterized in that**
- each second series (51) secured to a wall comprises at least two flexible blades (511), each flexible blade of this second series extending over at least half of the width of the groove;
- each of the flexible blades of each second series (51) has two lateral faces forming an obstruction to the circulation of air in the groove, these lateral faces being connected together by edge walls forming the thickness of the blade, an upper edge wall (512) being intended to come into contact with the road during travel and a lower edge wall (513) facing the bottom of the groove in which the device (5) is arranged, the wall of lower edge (513) forming a **non-zero** average angle A with a direction passing through the points of connection between the lateral walls and the bottom of the groove, this angle A being such that the wall of lower edge tends to move away from the bottom of the groove when this lower edge wall is travelled from the lateral wall to which it is fixed.

2. The tread (1) for a tire according to claim 1 **characterized in that** the average angle A of the lower edge of the flexible blades (511) of each second series (51) is at least equal to 10° and even more preferably at least equal to 20° with the aim of making for easier demoulding by reducing forces acting on the blades during the demoulding operation.

3. The tread (1) for a tire according claim 1 or claim 2 **characterized in that** the flexible blades (501) of the first series (50) and the flexible blades (511) of each second series (51) are arranged so as to be offset relative to each other to allow partial overlap between the lateral faces of said blades taken two by two and carry out more complete closing of the cross-section of the groove.

4. The tread (1) for a tire according to any one of claims 1 to 3 **characterized in that** the maximal height H of each flexible blade (501) of the first series (50) fixed to the bottom (20) of the groove is at most equal to 80% of the depth P of the groove.

5. The tread (1) for a tire according to any one of claims 1 to 4 **characterized in that** the thickness of each flexible blade (501) carried by the bottom (20) of groove is less than the thickness of each flexible blade (511) carried by a lateral wall of the groove.

6. The tread (1) for a tire according to claim 5, **characterized in that** the thickness of each flexible blade fixed to the bottom of the groove is at most equal to 0.4 mm and more preferably equal to 0.3 mm.

7. The tread (1) for a tire according to any one of claims 1 to 6 **characterized in that** the noise-reduction device formed in a groove comprises a first series (50) of flexible blades (501) of triangular geometry.

8. The tread (1) for a tire according to claim 7 **characterized in that** the first series of flexible blades comprises at least two flexible blades.

9. The tread (1) for a tire according to any one of claims 1 to 8 **characterized in that** the device (5) closes the cross-section of the groove over at least 90% of the cross-section of said groove in the new state.
